# EUROPÄISCHE PATENTSCHRIFT

(11) **EP 2 117 108 B1**
(45) Veröffentlichungstag und Bekanntmachung des Hinweises auf die Patenterteilung: **26.11.2014**
(21) Anmeldenummer: 09004632.7
(22) Anmeldetag: 31.03.2009
(51) Int. Cl.: H02P 1/46, H02P 9/08

(54) **Verfahren zum Starten eines Systems zur Erzeugung von elektrischer Energie**
Method for starting a system for generating electrical energy
Procédé de démarrage d'un système destiné à la production d'énergie électrique

(30) Priorität: 10.05.2008 DE 102008023210
(43) Veröffentlichungstag der Anmeldung: 11.11.2009
(73) Patentinhaber: GE Energy Power Conversion Technology Limited, Rugby Warwickshire CV21 1BU (GB)
(72) Erfinder: Möhlenkamp, Georg, Dr., 14979 Großbeeren (DE); Bocquel, Aurélie, 10823 Berlin (DE)
(74) Vertreter: Serjeants LLP

(56) Entgegenhaltungen:
- DE-A1- 3 341 984
- DE-A1- 10 157 257
- DE-A1- 10 252 234

## Beschreibung

Die Erfindung betrifft ein Verfahren zum Starten eines Systems zur Erzeugung von elektrischer Energie sowie ein entsprechendes System zur Erzeugung von elektrischer Energie.

Ein derartiges System ist beispielsweise aus der DE 102 52 234 A1 bekannt.

Aus der US 5,694,026 ist ein System bekannt, bei dem eine Turbine mechanisch direkt mit einem Generator gekoppelt ist, der seinerseits über einen Umrichter und einen Transformator mit einem elektrischen Energieversorgungsnetz verbunden ist. Zwischen der Turbine und dem Generator ist kein mechanisches Getriebe vorhanden. Im generatorischen Betrieb wird die Turbine mit Brennstoff versorgt, so dass der Generator von der Turbine angetrieben wird und elektrische Energie erzeugt. Diese Energie wird über den Umrichter und den Transformator in das Energieversorgungsnetz eingespeist.

Zum Starten der Turbine aus dem Stillstand wird der Generator motorisch betrieben. Zu diesem Zweck wird elektrische Energie aus dem Energieversorgungsnetz über den Transformator und den Umrichter dem Generator zugeführt, so dass dieser in eine Drehbewegung versetzt wird. Auf diese Weise wird die Turbine auf eine erwünschte Drehzahl beschleunigt.

Aufgabe der Erfindung ist es, das bekannte System zur Erzeugung elektrischer Energie zu verbessern.

Die Erfindung löst diese Aufgabe durch ein Verfahren zum Starten eines Systems zur Erzeugung von elektrischer Energie nach dem Anspruch 1 sowie durch ein entsprechendes System zur Erzeugung von elektrischer Energie nach dem Anspruch 8.

Das erfindungsgemäße System weist eine mit einem Generator mechanisch gekoppelte Turbine auf und der Generator ist elektrisch über einen Umrichter mit einer Last, insbesondere mit einem elektrischen Energieversorgungsnetz gekoppelt. Weiterhin weist der Generator eine Gesamtanzahl von Wicklungen auf, wobei jede der Wicklungen des Generators mit einer Anzahl von Schalteinrichtungen verbunden ist, die der Phasenzahl der Last entspricht. Bei dem erfindungsgemäßen Verfahren wird bei niederen Drehzahlen der Turbine eine Anzahl von Wicklungen des Generators zusammengefasst, wobei das Zusammenfassen dadurch erreicht wird, dass nur die mit der Anzahl von Wicklungen verbundenen Schalteinrichtungen angesteuert werden, während alle anderen Schalteinrichtungen gesperrt werden, und wobei die zusammengefasste Anzahl von Wicklungen kleiner ist als die Gesamtanzahl.

Während des Startens und damit bei niederen Drehzahlen der Turbine und des Generators ist die induzierte Spannung an den Wicklungen des Generators sowie die Frequenz dieser Spannung sehr klein. Durch die erfindungsgemäße Zusammenfassung von Wicklungen des Generators kann eine größere Spannung erzeugt werden. Mit Hilfe dieser größeren Spannung ist es möglich, den als Motor wirkenden Generator und damit auch die Turbine in eine Drehbewegung zu versetzen. Damit können für das Starten der Turbine, bei dem der Generator motorisch betrieben wird, dieselben Bauteile verwendet werden, wie sie für den generatorischen Betrieb des Generators bereits vorhanden sind. Weiterer Aufwand und damit zusätzliche Kosten entstehen somit nicht.

Bei einer vorteilhaften Ausgestaltung der Erfindung ist der Generator als Synchrongenerator ausgebildet, insbesondere als Synchrongenerator mit einer polygonalen Ausbildung der Wicklungen. Bei diesem Generator kann die erfindungsgemäße Zusammenfassung von Wicklungen in besonders einfacher Weise durchgeführt werden.

Weiterhin ist es besonders vorteilhaft, wenn der Umrichter bei niederen Drehzahlen der Turbine in Abhängigkeit von der Last, insbesondere in Abhängigkeit von dem Energieversorgungsnetz, und bei höheren Drehzahlen in Abhängigkeit von dem Generator kommutiert wird. Dies gewährleistet eine sichere Funktionsweise des Umrichters über den gesamten Drehzahlbereich der Turbine und damit auch über den gesamten Drehzahlbereich des Generators.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

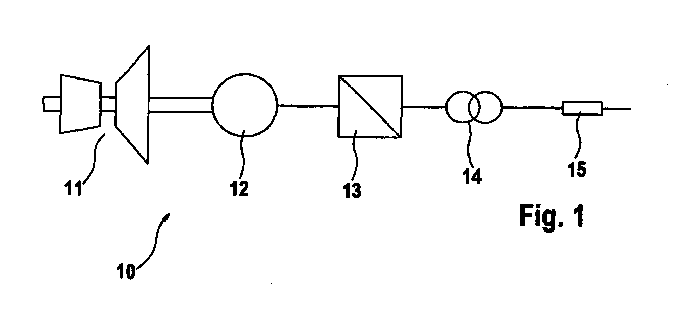

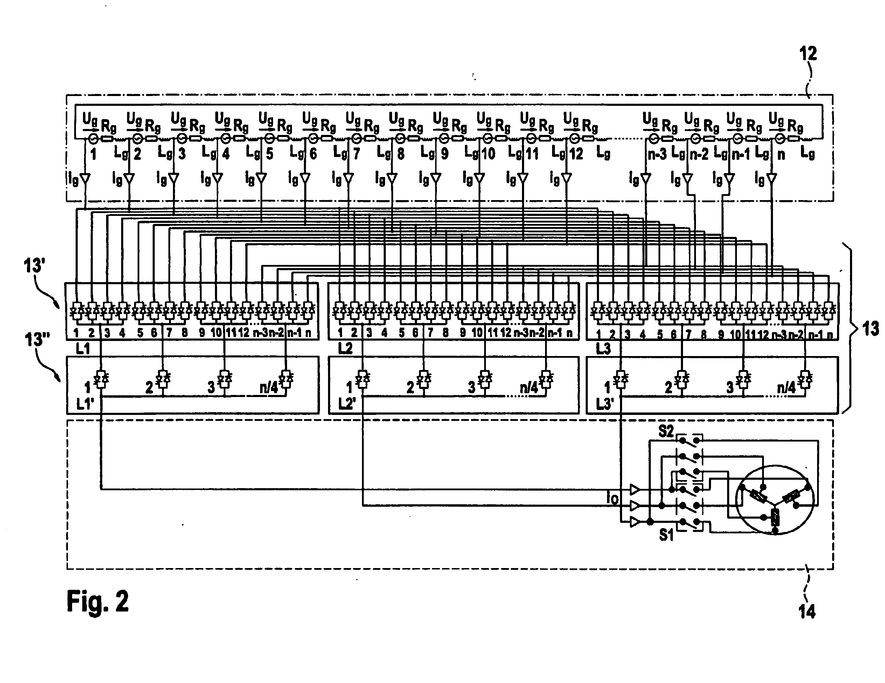

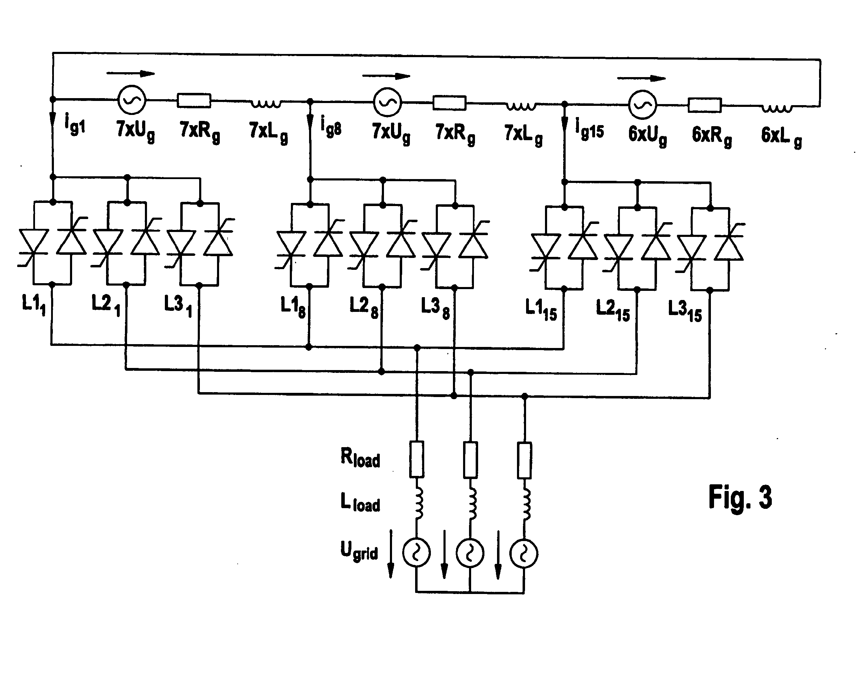

Figur 1 zeigt ein schematisches Blockschaltbild eines Ausführungsbeispiels eines erfindungsgemäßen Systems zur Erzeugung von elektrischer Energie, Figur 2 zeigt ein elektrisches Schaltbild eines Ausführungsbeispiels einer Zusammenschaltung eines Generators, eines Umrichters und eines Transformators zur Verwendung in dem System der Figur 1, und Figur 3 zeigt ein elektrisches Schaltbild eines Ausführungsbeispiels des Umrichters der Figur 2.

Das in der Figur 1 gezeigte System 10 zur Erzeugung elektrischer Energie weist eine Turbine 11 auf, die mechanisch mit einem elektrischen Generator 12 direkt gekoppelt ist. Ein zwischengeschaltetes Getriebe oder dergleichen ist nicht vorhanden. Der Generator 12 ist mit einem elektrischen Umrichter 13 verbunden, an den ein elektrischer Transformator 14 angeschlossen ist. Der Transformator 14 ist weiterhin mit einer elektrischen Last 15, beispielsweise mit einem elektrischen Energieversorgungsnetz verbunden.

Im Betrieb wird die Turbine 11 beispielsweise mit Hilfe von Brennstoffen in Rotation versetzt. Über die direkte mechanische Kopplung wird auch der Generator 12 in eine Drehbewegung versetzt und erzeugt damit in einem generatorischen Betrieb eine Ausgangsspannung mit einer drehzahlabhängigen Frequenz. Mit Hilfe des Umrichters 13 wird diese veränderliche Frequenz der Ausgangsspannung in eine im wesentlichen feste Frequenz umgewandelt, die beispielsweise der Frequenz des Energieversorgungsnetzes entspricht. Danach wird die Ausgangsspannung noch mittels des Transformators 14 auf eine vorgegebene Spannung beispielsweise des Energieversorgungsnetzes angehoben. Insgesamt wird auf diese Weise von dem erläuterten System 10 elektrische Energie erzeugt und beispielsweise in das Energieversorgungsnetz eingespeist.

In der Figur 2 sind der Generator 12, der Umrichter 13 und der Transformator 14 sowie deren elektrische Zusammenschaltung im Detail dargestellt.

Bei dem Generator 12 handelt es sich um einen Synchrongenerator mit einer Gesamtanzahl n von Wicklungen. Insbesondere handelt es sich um einen Synchrongenerator mit einer polygonalen Ausbildung der Wicklungen. Wie aus der Figur 2 hervorgeht, weist jede der n Wicklungen einen Leitungswiderstand Rg und eine Wicklungsinduktivität Lg auf. Diese Leitungswiderstände Rg und Wicklungsinduktivitäten Lg sind von "1" bis "n" durchnummeriert. Im generatorischen Betrieb des Generators 12 wird in jeder der n Wicklungen eine Spannung Ug induziert, die zu einem Strom ig zu dem Umrichter 13 führt.

Bei dem Umrichter 13 handelt es sich um einen Matrixumrichter, der auch als zweistufiger Direktumrichter betrachtet werden kann. Jede der n Wicklungen des Generators 12 ist in einer ersten Stufe 13' mit drei Schalteinrichtungen jeweils bestehend aus zwei gegensinnig parallel geschalteten Thyristoren verbunden. Die jeweils drei Schalteinrichtungen der n Wicklungen sind (bildlich) in separaten Blöcken L1, L2, L3 zusammengefasst und innerhalb der drei Blöcke jeweils von "1" bis "n" durchnummeriert.

Innerhalb der drei Blöcke L1, L2, L3 sind im vorliegenden Ausführungsbeispiel immer vier Schalteinrichtungen ausgangsseitig zusammengeschaltet und einer zweiten Stufe 13'' zugeführt. Allgemein können p Schalteinrichtungen ausgangsseitig zusammengeschaltet und der zweiten Stufe 13'' zugeführt sein. In der zweiten Stufe 13'' sind die vier bzw. p zusammengefassten Schalteinrichtungen mit weiteren Schalteinrichtungen jeweils bestehend aus zwei gegensinnig parallel geschalteten Thyristoren verbunden. Die zu einem der Blöcke L1, L2, L3 der ersten Stufe zugehörigen Schalteinrichtungen der zweiten Stufe 13'' sind wieder (bildlich) in jeweils einen Block L1', L2', L3' zusammengefasst und innerhalb dieser Blöcke jeweils von "1" bis "n/4" bzw. "n/p" durchnummeriert.

Die beschriebene zweistufige Ausbildung des Umrichters 13 ist insbesondere bei höheren Spannungen vorteilhaft, bei denen Reihenschaltungen von Thyristoren erforderlich sind. In diesen Fällen kann durch die zweistufige Ausbildung die Anzahl der notwendigen Thyristoren reduziert werden. Sofern beispielsweise aufgrund der Spannungshöhe keine Reihenschaltung der Thyristoren erforderlich ist, kann die zweite Stufe 13'' überbrückt werden.

Von den jeweils vier letztgenannten zusammengefassten Schalteinrichtungen der Blöcke L1', L2', L3' ist eine dreiphasige Verbindung zu dem Transformator 14 vorhanden.

Über diese Verbindung fließt im generatorischen Betrieb des Generators 12 ein Strom i0 zum Transformtor 14.

Bei dem Transformator 14 handelt es sich insbesondere um einen Blocktransformator, von dem nur die dem Umrichter 13 zugeordnete Seite dargestellt ist, und der dort drei Wicklungen in Sternschaltung aufweist. Diese dem Umrichter 13 zugeordneten Wicklungen sind auf zweierlei Arten verschaltbar. Einerseits ist es möglich, die vorgenannte, von dem Umrichter 13 kommende dreiphasige Verbindung mit den vollständigen Wicklungen des Transformators 14 zu verbinden. Andererseits ist es mit Hilfe von Zwischenabgriffen an den Wicklungen möglich, nur einen Teil der Wicklungen zu verwenden und die genannte dreiphasige Verbindung nur mit diesem Teil der Wicklungen des Transformators 14 zu verbinden. Die Umschaltung zwischen diesen Möglichkeiten erfolgt mit Hilfe von zwei dreiphasigen Schaltern S1 und S2, die in die Leitungen zu den Wicklungen sowie zu deren Zwischenabgriffen eingefügt sind.

Im generatorischen Betrieb des Generators 12 ist der Schalter S1 geschlossen, so dass die vollständigen Wicklungen des Transformators 14 zur Wirkung kommen. Wird die Turbine 11, wie erläutert wurde, beispielsweise mit Hilfe von Brennstoffen in Rotation versetzt, so wird die von dem Generator 12 erzeugte elektrische Energie über den Umrichter 13 und den Transformator 14 der Last 15, insbesondere dem elektrischen Energieversorgungsnetz zugeführt.

Ist als Turbine 11 beispielsweise eine Gasturbine oder eine technisch ähnliche Turbine vorgesehen, so muss diese Turbine 11 zum Starten des gesamten Systems 10 aus dem Stillstand auf eine Betriebsdrehzahl beschleunigt werden.

Bei einer Gasturbine ist es dabei erforderlich, dass die Turbine 11 zuerst von außen, also ohne eigenen Antrieb, auf beispielsweise etwa 70% bis etwa 90 % ihrer Betriebsdrehzahl beschleunigt wird. Erst danach kann sich die Turbine 11 selbst durch eine Brennstoffeinspeisung, also durch eigenen Antrieb, auf die volle Betriebsdrehzahl weiter beschleunigen.

Für denjenigen Zeitbereich der Beschleunigung, bei dem die Turbine 11 von außen angetrieben werden muss, wird der Generator 12 des erläuterten Systems 10 als Motor betrieben. Der Generator 12 wird also über den Transformator 14 und den Umrichter 13 mit elektrischer Energie versorgt und dadurch in eine Drehbewegung versetzt. Die Energie wird dabei aus der Last 15, insbesondere aus dem elektrischen Energieversorgungsnetz abgezogen. Aufgrund der mechanischen Kopplung wird auch die Turbine 11 in eine Drehbewegung versetzt und wird somit beschleunigt, ohne dass hierzu ein eigener Antrieb der Turbine 11 erforderlich ist.

Der vorgenannte Zeitbereich der Beschleunigung, bei dem die Turbine 11 von dem motorisch betriebenen Generator 12 angetrieben wird, ist in drei Teilbereiche aufgeteilt. Während einer ersten Zeitdauer T1 wird die Turbine 11 aus dem Stillstand bis auf etwa 30 % bis etwa 50 % ihrer Betriebsdrehzahl beschleunigt, insbesondere auf etwa 40 % ihrer Betriebsdrehzahl. Die erste Zeitdauer T1 betrifft daher niedere Drehzahlen der Turbine 11. Danach werden die Schalteinrichtungen des Umrichters 13 für eine zweite Zeitdauer T2 vollständig abgeschaltet. Während einer nachfolgenden dritten Zeitdauer T3 wird die Turbine 11 von etwa 30 % bis etwa 50 % auf etwa 70 % bis etwa 90 % ihrer Betriebsdrehzahl beschleunigt, insbesondere auf etwa 80 % ihrer Betriebsdrehzahl. Die dritte Zeitdauer T3 betrifft daher hohe Drehzahlen der Turbine 11.

Während der ersten Zeitdauer T1 ist eine Anzahl von Wicklungen des Generators 12 zusammengefasst, so dass ein m-phasiger Generator entsteht, wobei die Anzahl m der zusammengefassten Wicklungen kleiner ist als die Gesamtanzahl n der Wicklungen. Die Zusammenfassung der Wicklungen wird dabei im wesentlichen symmetrisch innerhalb des Generators 12 vorgenommen.

In der Figur 3 ist beispielhaft ein 20-phasiger Generator dargestellt, bei dem also n = 20 Wicklungen vorhanden sind. Bei diesem Generator sind die Wicklungen derart zusammengefasst, dass ein 3-phasiger Generator entsteht, dass also m = 3 ist. Gemäß der Figur 3 wird dies dadurch erreicht, dass die Wicklungen mit den Nummern 1 bis 7 sowie die Wicklungen mit den Nummern 8 bis 15 sowie die Wicklungen mit den Nummern 16 bis 20 jeweils zusammengefasst sind. Wie ebenfalls aus der Figur 3 hervorgeht, ergeben die Wicklungen mit den Nummern 1 bis 7 zusammen das Siebenfache des Leitungswiderstands Rg, das Siebenfache der Wicklungsinduktivität Lg und das Siebenfache der induzierten Spannung Ug. Entsprechendes gilt für die Wicklungen mit den Nummern 8 bis 15. Für die Wicklungen mit den Nummern 16 bis 20 entsteht der jeweils sechsfache Wert. Damit ist eine im wesentlichen symmetrische Verteilung der zusammengefassten Wicklungen über den 20-phasigen Generator gegeben.

Die erläuterte Zusammenfassung von Wicklungen wird dadurch erreicht, dass nur die in der Figur 3 gezeigten Schalteinrichtungen angesteuert werden, also in ihren leitenden Zustand geschaltet werden, während alle anderen Schalteinrichtungen jedoch in ihrem gesperrten Zustand verbleiben. Bei den in der Figur 3 gezeigten Schalteinrichtungen handelt es sich um diejenigen Schalteinrichtungen, die in der Figur 2 in dem jeweils angegebenen Block L1, L2 oder L3 enthalten sind und dort die in der Figur 3 angegebene Nummer besitzen. Beispielsweise handelt es sich bei der Schalteinrichtung L38 der Figur 3 um die Schalteinrichtung mit der Nummer 8 in dem Block L3 der Figur 2.

In dem vorgenannten motorischen Betrieb des Generators 12 wird elektrische Energie beispielsweise aus dem elektrischen Energieversorgungsnetz entnommen, das in der Figur 3 in der Form der Netzspannung Ugrid, der Leitungswiderstände Rload und der Leitungsinduktivitäten Lload dargestellt ist. Der Transformator 14 ist in der Figur 3 nicht dargestellt, sondern in den vorgenannten Leitungswiderständen und Leitungsinduktivitäten enthalten.

Im Stillstand des Generators 12 wird die elektrische Energie von dem Energieversorgungsnetz über die in der Figur 3 gezeigten Schalteinrichtungen den in der erläuterten Weise zusammengefassten Wicklungen des Generators zugeführt. Damit beginnt die erste Zeitdauer T1 des Betriebs des Generators 12.

Im Stillstand ist die Spannung am Generator 12 gleich Null. Eine generatorabhängige Kommutierung der Schalteinrichtungen des Umrichters 13 ist damit nicht möglich. Es erfolgt deshalb eine netzabhängige Kommutierung der nicht-gesperrten Schalteinrichtungen.

Am Anfang der ersten Zeitdauer T1 nach dem Start aus dem Stillstand ist die Spannung an den einzelnen Wicklungen des Generators 12 sowie deren Frequenz sehr klein. Durch die Zusammenfassung von Wicklungen kann eine größere Spannung am Generator 12 erzeugt werden. Dabei ist es vorteilhaft, wenn der Schalter S2 am Transformator 14 geschlossen ist, so dass die Netzspannung Ugrid nur teilweise am Stromrichter 13 anliegt. Insgesamt ist es damit möglich, dass der Generator 12 aus dem Stillstand in eine Drehbewegung versetzt wird.

Während der gesamten ersten Zeitdauer T1 wird die netzabhängige Kommutierung aufrecht erhalten. Weiterhin kann eine Regelung der über den Generator 12 fließenden Ströme vorgesehen sein. Auf diese Weise erhöht sich die Drehzahl des Generators 12 und damit auch die Drehzahl der Turbine 11.

Der magnetische Fluss im Generator 12 wird während der ersten Zeitdauer T1 etwa konstant auf einem Normalwert gehalten. Dies hat zur Folge, dass sich die Spannung am Generator 12 etwa proportional zu dessen Drehzahl erhöht. Diese Spannung würde damit gegebenenfalls auf zu hohe Werte ansteigen. Der magnetische Fluss wird deshalb beispielsweise oberhalb von etwa 12,5 % der Betriebsdrehzahl des Generators 12 vermindert. Dies wird dadurch erreicht, dass die Erregung des Generators 12 oberhalb der vorgenannten 12,5 % etwa proportional zum Drehzahlanstieg vermindert wird. Damit bleibt die Spannung am Generator 12 oberhalb der genannten 12,5 % etwa konstant.

Erreicht die Turbine insbesondere etwa 40 % ihrer Betriebsdrehzahl, so werden die Schalteinrichtungen des Umrichters 13 während der Zeitdauer T2 für kurze Zeit, insbesondere für etwa 3 bis 5 Sekunden, vollständig abgeschaltet.

Während der nunmehr folgenden dritten Zeitdauer T3 wird der Umrichter 13 auf normale Weise betrieben. Die Zusammenfassung von Generatorwicklungen, wie dies im Zusammenhang mit der ersten Zeitdauer T1 erläutert wurde, ist also während der dritten Zeitdauer T3 nicht mehr der Fall. Es gilt damit für die dritte Zeitdauer T3 das Schaltbild der Figur 2. Dabei bleibt der Schalter S2 am Transformator 14 weiterhin geschlossen, so dass die Netzspannung Ugrid weiterhin nur zum Teil an dem Umrichter 13 anliegt.

Weiterhin erfolgt während der dritten Zeitdauer T3 keine netzabhängige Kommutierung wie während der ersten Zeitdauer T1, sondern eine generatorabhängige Kommutierung der Schalteinrichtungen des Umrichters 13. Die Statorströme des Generators 12 werden dabei derart geregelt, dass Wirkleistung vom Energieversorgungsnetz zum Generator 12 fließt. Der magnetische Fluss im Generator 12 wird auf einen vorgegebenen Wert eingestellt, beispielsweise auf einen Wert, der wenig über dem Normalwert liegt. Hierzu wird die Erregung des Generators 12 entsprechend gesteuert oder geregelt.

Der Generator 12 und damit auch die Turbine 11 werden auf diese Weise beschleunigt.

Erreicht die Turbine 11 insbesondere etwa 80 % ihrer Betriebsdrehzahl, so wird der motorische Betrieb des Generators 12 beendet. Es werden die Schalteinrichtungen des Umrichters 13 abgeschaltet und der magnetische Fluss wird etwa auf den Normalwert zurückgefahren. Ebenfalls werden beide Schalter S1 und S2 am Transformator 14 geöffnet.

Weiterhin wird nunmehr Brennstoff der Turbine 11 zugeführt, so dass die Turbine 11 aus eigenem Antrieb vollends auf 100 % ihrer Betriebsdrehzahl beschleunigt wird.

Sobald die Turbine 11 ihre Betriebsdrehzahl erreicht hat, erfolgt ein generatorischer Betrieb des Generators 12, so dass nunmehr elektrische Energie in der bereits erläuterten Weise an die Last, insbesondere an das Energieversorgungsnetz abgegeben wird.

## Patentansprüche

1. Verfahren zum Starten eines Systems (10) zur Erzeugung von elektrischer Energie, **dadurch gekennzeichnet, dass** das System eine mit einem Generator (12), mit einer polygonale Ausbildung der Wicklungen, mechanisch gekoppelte Turbine (11) aufweist und der Generator (12) elektrisch über einen Umrichter (13) mit einem elektrischen Energieversorgungsnetz (15) gekoppelt ist, wobei der Umrichter (13) eine Mehrzahl von Schalteinrichtungen aufweist, wobei der Generator (12) eine Gesamtanzahl (n) von Wicklungen aufweist, und wobei jede der Wicklungen des Generators (12) mit einer Anzahl von Schalteinrichtungen (L1₁-L3ₙ) verbunden ist, die der Phasenzahl des elektrischen Energieversorgungsnetzes (15) entspricht und jede der Schalteinrichtungen (L1₁-L3ₙ) mit der jeweiligen Phase des elektrischen Energieversorgungsnetzes (15) verbunden ist, wobei bei dem Verfahren bei niederen Drehzahlen der Turbine (11) die Wicklungen des als Motor betriebenen Generators (12) zusammengefasst werden, um eine Anzahl (m) von zusammengefassten Wicklungen zu definieren so dass ein m-phasiger Generator entsteht, wobei die Anzahl (m) von zusammengefassten Wicklungen der Phasenzahl des elektrischen Energieversorgungsnetzes (15) entspricht, wobei das Zusammenfassen durch Ansteuern nur einiger der Schalteinrichtungen (L1₁-L3ₙ) erreicht wird, während alle anderen Schalteinrichtungen (L1₁-L3ₙ) gesperrt werden, wobei die zusammengefasste Anzahl (m) von Wicklungen kleiner ist als die Gesamtanzahl (n), und wobei die Wicklungen in einer im Wesentlichen symmetrischen Anordnung mit dem Generator (12) zusammengefasst werden.

2. Verfahren nach Anspruch 1, wobei die Anzahl von Wicklungen bei Drehzahlen der Turbine (11), die etwa 30 % bis etwa 50 % ihrer Betriebsdrehzahl, insbesondere etwa 40 % ihrer Betriebsdrehzahl entsprechen, zusammengefasst wird.

3. Verfahren nach Anspruch 1 oder 2, wobei die Anzahl von Wicklungen während einer ersten Zeitdauer (TI) zusammengefasst wird.

4. Verfahren nach einem der Ansprüche 1 bis 3, wobei die Anzahl von Wicklungen ab dem Stillstand der Turbine (11) zusammengefasst wird.

5. Verfahren nach Anspruch 1, wobei die nicht-gesperrten Schalteinrichtungen in Abhängigkeit von dem Energieversorgungsnetz kommutiert werden.

6. Verfahren nach einem der vorstehenden Ansprüche, wobei bei ansteigenden Drehzahlen der Turbine (11) der magnetische Fluss des Generators (12) zuerst konstant gehalten und dann vermindert wird.

7. Verfahren nach einem der vorstehenden Ansprüche, wobei zum Starten des Systems (10) der Umrichter (13) bei höheren Drehzahlen der Turbine (11) in Abhängigkeit von dem Generator (12) kommutiert wird.

8. System (10) zur Erzeugung von elektrischer Energie, mit einer Turbine (11), **dadurch gekennzeichnet, dass** die Turbine mit einem Generator (12), mit einer polygonale Ausbildung der Wicklungen, mechanisch gekoppelt ist, der seinerseits elektrisch über einen Umrichter (13) mit einem elektrischen Energieversorgungsnetz (15) gekoppelt ist, wobei der Umrichter (13) eine Mehrzahl von Schalteinrichtungen aufweist, wobei der Generator (12) eine Gesamtanzahl (n) von Wicklungen aufweist, und wobei jede der Wicklungen des Generators (12) mit einer Anzahl von Schalteinrichtungen (L1₁-L3ₙ) des Umrichters (13) verbunden ist, die der Phasenzahl des elektrischen Energieversorgungsnetzes (15) entspricht und jede der Schalteinrichtungen (L1₁-L3n) mit der jeweiligen Phase des elektrischen Energieversorgungsnetzes (15) verbunden ist, wobei Mittel vorgesehen sind, mit deren Hilfe bei niederen Drehzahlen der Turbine (11) die Wicklungen des als Motor betriebenen Generators (12) zusammenfassbar sind, um eine Anzahl (m) zusammengefasster Wicklungen zu definieren so dass ein m-phasiger Generator entsteht, wobei die Anzahl (m) von zusammenfassbar Wicklungen der Phasenzahl des elektrischen Energieversorgungsnetzes (15) entspricht, wobei das Zusammenfassen durch Ansteuern nur einiger der Schalteinrichtungen (L1₁-L3ₙ) erreichbar ist, während alle anderen Schalteinrichtungen (L1₁-L3ₙ) gesperrt werden, wobei die zusammengefasste Anzahl (m) von Wicklungen kleiner ist als die Gesamtanzahl (n), und wobei die Wicklungen in einer im Wesentlichen symmetrischen Anordnung mit dem Generator (12) zusammengefasst werden.

9. System nach Anspruch 8, wobei der Generator (12) als Synchrongenerator ausgebildet ist.

10. System nach Anspruch 8 oder 9, wobei der Umrichter (13) als Matrixumrichter ausgebildet ist, insbesondere als zweistufiger Direktumrichter.

11. System nach einem der Anspruche 8 bis 10, wobei ein Transformator (14) vorgesehen ist, dessen Wicklungen mit Zwischenabgriffen versehen sind, und wobei dem Transformator (14) ein Schalter (S2) zugeordnet ist, über den der Umrichter (13) mit den Zwischenabgriffen verbindbar ist.

## Claims

1. Method for starting a system (10) for generating electrical power, **characterized in that** the system comprises a turbine (11) that is mechanically coupled to a generator (12), having a polygonal formation of the windings, and the generator (12) is electrically coupled via a converter (13) to an electrical power supply network (15), wherein the converter (13) comprises a plurality of switching devices, wherein the generator (12) comprises a total number (n) of windings, and wherein each of the windings of the generator (12) is connected to a number of switching devices (L1₁-L3ₙ) which corresponds to the number of phases of the electrical power supply network (15), and each of the switching devices (L1₁-L3ₙ) is connected to the respective phase of the electrical power supply network (15), wherein in the method, at low rotational speeds of the turbine (11), the windings of the generator (12) operated as a motor are combined so as to define a number (m) of combined windings so that an m-phase generator is created, wherein the number (m) of combined windings corresponds to the number of phases of the electrical power supply network (15), wherein the combination is achieved by actuating only some of the switching devices (L1₁, L3ₙ), while all other switching devices (L1₁, L3ₙ) are blocked, wherein the combined number (m) of windings is smaller than the total number (n), and wherein the windings are combined in an essentially symmetrical arrangement with the generator (12).

2. The method according to claim, wherein the number of windings is combined at rotational speeds of the turbine (11) that correspond to approximately 30% to approximately 50% of the operating speed of the same, and more particularly to approximately 40% of the operating speed of the same.

3. The method according to claim 1 or 2, wherein the number of windings is combined during a first time duration (TI).

4. A method according to any one of claims 1 to 3, wherein the number of windings is combined starting with the stoppage of the turbine (11).

5. The method according to claim 1, wherein the switching devices that are not blocked are commutated as a function of the power supply network.

6. A method according to any one of the preceding claims, wherein the magnetic flux of the generator (12) is first kept constant and then reduced, when the rotational speeds of the turbine (11) increase.

7. A method according to any one of the preceding claims, wherein the converter (13) is commutated at higher rotational speeds of the turbine (11) as a function of the generator (12) so as to start the system (10).

8. A system (10) for generating electrical power, comprising a turbine (11), **characterized in that** the turbine is mechanically coupled to a generator (12), having a polygonal formation of the windings, the generator in turn is electrically coupled via a converter (13) to an electrical power supply network (15), wherein the converter (13) comprises a plurality of switching devices, wherein the generator (12) comprises a total number (n) of windings, and wherein each of the windings of the generator (12) is connected to a number of switching devices (L1₁-L3ₙ) of the converter (13) which corresponds to the number of phases of the electrical power supply network (15), and each of the switching devices (L1₁-L3ₙ) is connected to the respective phase of the electrical power supply network (15), wherein means are provided by way of which, at low rotational speeds of the turbine (11), the windings of the generator (12) operated as a motor can be combined so as to define a number (m) of combined windings so that an m-phase generator is created, wherein the number (m) of combinable windings corresponds to the number of phases of the electrical power supply network (15), wherein the combination can be achieved by actuating only some of the switching devices (L1₁, L3ₙ), while all other switching devices (L1₁, L3ₙ) are blocked, wherein the combined number (m) of windings is smaller than the total number (n), and wherein the windings are combined in an essentially symmetrical arrangement with the generator (12).

9. The system according to claim 8, wherein the generator (12) is designed as a synchronous generator.

10. The system according to claim 8 or 9, wherein the converter (13) is designed as a matrix converter, and more particularly as a two-stage cyclo-converter.

11. A system according to any one of claims 8 to 10, wherein a transformer (14) is provided, the windings of which are provided with intermediate taps, and wherein the transformer is associated with a switch (S2), via which the converter (13) can be connected to the intermediate taps.

## Revendications

1. Procédé de démarrage d'un système (10) destiné à la production d'énergie électrique, **caractérisé en ce que** le système comprend une turbine (11) couplée mécaniquement à une génératrice (12) comportant une configuration polygonale des enroulements, et la génératrice (12) est couplée électriquement, par l'intermédiaire d'un convertisseur (13), à un réseau d'alimentation en énergie électrique (15), le convertisseur (13) présentant une pluralité de dispositifs de couplage, la génératrice (12) comportant un nombre total (n) d'enroulements, et chacun des enroulements de la génératrice (12) étant relié à un nombre de dispositifs de couplage (L1₁-L3ₙ) qui correspond au nombre de phases du réseau d'alimentation en énergie électrique (15), et chacun des dispositifs de couplage (L1₁-L3ₙ) étant relié à la phase respective du réseau d'alimentation en énergie électrique (15), sachant qu'avec le procédé, en présence de vitesses de rotation faibles de la turbine (11), les enroulements de la génératrice (12) sont regroupés pour définir un nombre (m) d'enroulements regroupés, de manière à créer une génératrice à m phases, le nombre (m) d'enroulements regroupés correspondant au nombre de phases du réseau d'alimentation en énergie électrique (15), le regroupement étant obtenu par activation seulement de quelques-uns des dispositifs de couplage (L1₁-L3ₙ), tandis que tous les autres dispositifs de couplage (L1₁-L3ₙ) sont bloqués, le nombre (m) regroupé d'enroulements étant inférieur au nombre total (n), et les enroulements étant regroupés avec la génératrice (12) en une configuration sensiblement symétrique.

2. Procédé selon la revendication 1, selon lequel le nombre d'enroulements est regroupé pour des vitesses de rotation de la turbine (11) qui correspondent à environ 30 % à 50 % de sa vitesse de service, en particulier à environ 40 % de sa vitesse de service.

3. Procédé selon la revendication 1 ou 2, selon lequel le nombre d'enroulements est regroupé pendant une première durée (TI).

4. Procédé selon l'une des revendications 1 à 3, selon lequel le nombre d'enroulements est regroupé à partir de l'arrêt de la turbine (11).

5. Procédé selon la revendication 1, selon lequel les dispositifs de couplage non bloqués sont commutés en fonction du réseau d'alimentation en énergie électrique.

6. Procédé selon l'une des revendications précédentes, selon lequel, lorsque les vitesses de rotation de la turbine (11) augmentent, le flux magnétique de la génératrice (12) est d'abord maintenu constant et est ensuite réduit.

7. Procédé selon l'une des revendications précédentes, selon lequel, pour le démarrage du système (10), le convertisseur (13), à des vitesses de rotation plus élevées de la turbine (11), est commuté en fonction de la génératrice (12).

8. Système (10) destiné à la production d'énergie électrique, comprenant une turbine (11), **caractérisé en ce que** la turbine est couplée mécaniquement à une génératrice (12) comportant une configuration polygonale des enroulements et couplée à son tour électriquement, par l'intermédiaire d'un convertisseur (13), à un réseau d'alimentation en énergie électrique (15), le convertisseur (13) présentant une pluralité de dispositifs de couplage, la génératrice (12) comportant un nombre total (n) d'enroulements, et chacun des enroulements de la génératrice (12) étant relié à un nombre de dispositifs de couplage (L1₁-L3ₙ) du commutateur (13) qui correspond au nombre de phases du réseau d'alimentation en énergie électrique (15), et chacun des dispositifs de couplage (L1₁-L3ₙ) étant relié à la phase respective du réseau d'alimentation en énergie électrique (15), sachant qu'il est prévu des moyens à l'aide desquels, en présence de vitesses de rotation faibles de la turbine (11), les enroulements de la génératrice (12), utilisée comme moteur, sont regroupés pour définir un nombre (m) d'enroulements regroupés, de manière à créer une génératrice à m phases, le nombre (m) d'enroulements regroupés correspondant au nombre de phases du réseau d'alimentation en énergie électrique (15), le regroupement étant obtenu par activation seulement de quelques-uns des dispositifs de couplage (L1₁-L3ₙ), tandis que tous les autres dispositifs de couplage (L1₁-L3ₙ) sont bloqués, le nombre (m) regroupé d'enroulements étant inférieur au nombre total (n), et les enroulements étant regroupés avec la génératrice (12) en une configuration sensiblement symétrique.

9. Système selon la revendication 8, dans lequel la génératrice (12) est réalisée sous forme de génératrice synchrone.

10. Système selon la revendication 8 ou 9, dans lequel le convertisseur (13) est réalisé sous forme de convertisseur matriciel, en particulier sous forme de convertisseur direct à deux étages.

11. Système selon l'une des revendications 8 à 10, dans lequel il est prévu un transformateur (14) dont les enroulements sont dotés de prises intermédiaires, et un interrupteur (S2) étant associé au transformateur (14), par l'intermédiaire duquel le convertisseur (13) peut être relié aux prises intermédiaires.
